# EUROPÄISCHE PATENTSCHRIFT

(11) **EP 3 629 177 B1**
(45) Veröffentlichungstag und Bekanntmachung des Hinweises auf die Patenterteilung: **01.09.2021**
(21) Anmeldenummer: 18197522.8
(22) Anmeldetag: 28.09.2018
(51) Int. Cl.: G06F 11/14, G06F 11/07

(54) **VERFAHREN ZUM ÜBERPRÜFEN EINES BETRIEBS EINES ELEKTRONISCHEN DATENVERARBEITUNGSMITTELS**
METHOD FOR CHECKING AN OPERATION OF AN ELECTRONIC DATA PROCESSING MEANS
PROCÉDÉ DE VÉRIFICATION DU FONCTIONNEMENT D'UN MOYEN DE TRAITEMENT DE DONNÉES ÉLECTRONIQUE

(43) Veröffentlichungstag der Anmeldung: 01.04.2020
(73) Patentinhaber: SICK AG, 79183 Waldkirch (DE)
(72) Erfinder: Pokrandt, Peter, 76474 Au am Rhein (DE)
(74) Vertreter: Manitz Finsterwald Patent- und Rechtsanwaltspartnerschaft mbB

(56) Entgegenhaltungen:
- WO-A1-2014/001543
- US-A- 5 880 982
- US-A1- 2012 221 897
- US-A1- 2013 093 896
- US-A1- 2017 031 786
- AMMANN P E ET AL: "DATA DIVERSITY: AN APPROACH TO SOFTWARE FAULT TOLERANCE", IEEE TRANSACTIONS ON COMPUTERS, IEEE, USA, Bd. 37, Nr. 4, 1. April 1988 (1988-04-01), Seiten 418-425, XP000648378, ISSN: 0018-9340, DOI: 10.1109/12.2185

## Beschreibung

Die vorliegende Erfindung betrifft eine Vorrichtung, die dazu ausgebildet ist, ein Verfahren zum Überprüfen eines Betriebs wenigstens eines Mittels zur elektronischen Datenverarbeitung auszuführen.

Mittel zur elektronischen Datenverarbeitung (bzw. elektronische Datenverarbeitungsmittel) sind grundsätzlich bekannt und können allgemein durch ein oder mehrere Teile einer elektronischen Datenverarbeitungsanlage gebildet sein, wie z.B. ein Prozessor oder ein Speicherelement. Ein Mittel zur elektronischen Datenverarbeitung kann somit ein funktional abgrenzbares Bauteil oder sogar eine Baueinheit einer Datenverarbeitungsanlage (z.B. eine Gruppe von Bauteilen gleichen Typs) sein. Ein Mittel kann aber auch durch ein spezifisches Element eines Bauteils, z.B. eine arithmetisch-logische Einheit (ALU) eines Prozessors, gebildet sein.

Ein Datenverarbeitungsmittel kann allerdings auch durch ein oder mehrere elektronische Befehle, insbesondere Programmfunktionen oder Funktionsbibliotheken, gebildet sein. Mit anderen Worten bezieht sich der Begriff Datenverarbeitungsmittel auch auf Software, die zur Datenverarbeitung verwendet wird und hierzu allgemein in einer Datenverarbeitungsanlage gespeichert oder anderweitig, z.B. als eingebettete Software, implementiert sein kann.

Mittel zur elektronischen Datenverarbeitung funktionieren nicht immer fehlerfrei. Die Ursachen können je nach betrachtetem Mittel sowohl in der Hardware als auch in der Software liegen. Moderne Datenverarbeitungsanlagen weisen oftmals eine sehr große Anzahl von einzelnen Bauteilen und Softwareeinheiten auf, sodass die Ursachen für etwaige Fehler sehr komplex sein können. Es kann hierbei auch vorkommen, dass fehlerbehaftete Mittel zur elektronischen Datenverarbeitung nicht ohne Weiteres aufgedeckt werden, da ein betreffender Fehler noch nicht zu einem durch einen Benutzer erkennbaren Fehlverhalten der Datenanlage geführt hat.

Mögliche Fehler sind insbesondere dann unerwünscht, wenn das betreffende Mittel zur Umsetzung einer sicherheitskritischen Anwendung eingesetzt wird. So kann das Mittel beispielsweise zum Betrieb einer industriellen Maschine dienen, von der potentielle Gefahren für Personen ausgehen. Vor diesem Hintergrund müssen an die elektronischen Datenverarbeitungsmittel erhöhte Sicherheitsanforderungen gestellt werden, um einen sicheren Betrieb zu gewährleisten. Hierbei reicht es regelmäßig nicht aus, ein betreffendes Mittel lediglich einmal, z.B. nach seiner Produktion, bezüglich einer korrekten Funktionsweise zu überprüfen. Vielmehr sollte das Mittel wiederholt und insbesondere während eines laufenden Betriebs überprüft werden, sodass auch noch später etwaige Ausfälle oder Fehlfunktionen einzelner Mittel festgestellt werden können.

Um einen Fehler aufzudecken und/oder um einen korrekten Betrieb eines Datenverarbeitungsmittels gewährleisten zu können ist es bekannt, ein betreffendes Mittel redundant auszuführen. D.h. ein betreffendes Mittel, z.B. ein Prozessor, kann an einer Vorrichtung doppelt vorgesehen sein. Mit anderen Worten wird eine einem betreffenden Mittel zugewiesene Datenverarbeitungsaufgabe zusätzlich durch ein zweites Mittel durchgeführt, welches vorzugsweise gleichartig zu dem betreffenden Mittel ausgebildet ist. Durch Vergleich der durch die Mittel gelieferten Ergebnisse kann eine durch einen Fehler verursachte Abweichung leicht festgestellt werden. Im Falle einer Abweichung können automatisch geeignete Maßnahmen getroffen werden.

Durch eine redundante Ausführung von Datenverarbeitungsmitteln muss auf speziell angepasste Hardware und/oder Software zurückgegriffen werden. Dies führt zu unerwünschten Mehrkosten, weil keine kostengünstigen Standardlösungen eingesetzt werden können.

Ein weiterer Aspekt liegt in dem Einsatz von zentralen Servern zur Datenverarbeitung. Solche Server sind durch die fortschreitende Digitalisierung mittlerweile stark verbreitet und bieten allgemein Vorteile, indem sie kostengünstig Rechen- und Speicherkapazität zur Verfügung stellen, wobei z.B. besonders intensive Datenverarbeitungsaufgaben in die sogenannte "cloud" ausgelagert werden können. Die Anforderung an eine redundante Ausführung von Datenverarbeitungsmitteln kann jedoch bei dem Einsatz von zentralen Servern in der Regel nicht erfüllt werden. Ferner kann insbesondere bei sicherheitskritischen Anwendungen nicht mit ausreichender Wahrscheinlichkeit davon ausgegangen werden, dass ein betreffender Server stets fehlerfreie Ergebnisse liefert. Selbst wenn die Hardware an sich fehlerfrei ist, so besteht dennoch die Möglichkeit fehlerhafter Softwarefunktionen, wie etwa falsch programmierte Berechnungsfunktionen.

Das Dokument WO 2014/001543 A1 zeigt eine Vorrichtung mit den Merkmalen des Oberbegriffs von Anspruch 1. Das Dokument US 2012/0221897 A1 beschreibt ein Verfahren zur diversitären Softwareüberprüfung mittels Gletikommaarithmetik auf Basis von Gleitkommazahlen.

Es ist eine Aufgabe der Erfindung, ein möglichst einfaches Verfahren zum Überprüfen eines Mittels zur elektronischen Datenverarbeitung zur Anwendung in sicherheitsrelevanten Vorrichtungen bereitzustellen.

Die Aufgabe wird gelöst durch den Gegenstand mit den Merkmalen des Anspruchs 1.

Zusammengefasst werden zur Prüfung eines betreffenden Datenverarbeitungsmittels zwei unterschiedliche Datentypen verwendet. Das betreffende Mittel wird jeweils mit einem der zwei Datentypen betrieben, um ein jeweiliges Betriebsergebnis zu erhalten. Durch den Einsatz unterschiedlicher Datentypen wird das Mittel auf unterschiedliche Weisen verwendet, weil die Verwendung des Mittels in Abhängigkeit des Datentyps bestimmte Betriebseigenschaften des Mittels aktiviert, die sich je nach Datentyp unterscheiden. Durch den Vergleich von zwei Betriebsergebnissen, die jeweils einem unterschiedlichen Datentyp zugeordnet sind, kann somit ein Fehler festgestellt werden, der bei alleinigem Einsatz eines Datentyps unentdeckt bleiben würde. Da lediglich von dem Betrieb eines betreffenden Mittels ausgegangen wird, ist die redundante Ausführung des Mittels nicht erforderlich. Das Mittel muss lediglich unter Verwendung unterschiedlicher Datentypen betrieben werden, wobei eine Abweichung der entsprechenden Betriebsergebnisse unter Heranziehung eines Prüfkriteriums identifiziert wird. Im Falle einer Abweichung bzw. einer Verletzung des Prüfkriteriums wird automatisch ein Signal generiert, welches den Fehler z.B. in Form einer Fehlermeldung (z.B. Alarm) anzeigt oder automatisch zum Auslösen einer Gegenmaßnahme (z.B. Abschalten einer Vorrichtung) verwendet werden kann.

Ein Datentyp entspricht einer Datenart und ist ein z.B. auf dem Gebiet der Informatik allgemein bekannter Begriff. Er bezeichnet eine Zusammenfassung von Objektmengen mit darauf definierten Operationen. In Bezug auf Programmiersprachen bezeichnet der Begriff Datentyp die Zusammenfassung konkreter Wertebereiche und darauf definierten Operationen zu einer Einheit. Beispiele für Datentypen sind daher Ganze Zahlen (z.B. Integer, Long), Kommazahlen (z.B. Float, Double), Zeichenketten (z.B. String) oder auch komplexere Typen oder Objekte. Solche Datentypen sind auch als sogenannte konkrete Datentypen bekannt.

Datentypen können allgemein verwendet werden, um Speicherbereichen eines Speichers eine konkrete Semantik zuzuweisen. Diese Speicherbereiche können als Variablen (dynamische Speicherung mit Adresse) oder Konstanten (feste Speicherung) ausgebildet sein. Datentypen können somit einen direkten Zusammenhang zu dem Betrieb einer zugrundeliegenden Hardwarekomponente, insbesondere eines Speichers, aufweisen. Ferner weisen Datentypen auch einen Zusammenhang zu dem Betrieb auf der Ebene der Programmanweisungen (Software) auf. Dies ergibt sich bereits aus der Tatsache, dass ein Datentyp auch durch einen konkreten Satz von zulässigen Operationen definiert ist.

Allgemein ist ein jeweiliges Betriebsergebnis des Mittels als ein Ergebnis des Betriebs in Bezug auf eine zu überprüfende Funktion des Mittels zu verstehen. Das Betriebsergebnis kann somit auch als ein Funktionsergebnis angesehen werden, welches eine bestimmte (Betriebs-) Funktion des Mittels repräsentiert. Die jeweilige Funktion wird hierbei durch den zugrundeliegenden Datentyp beeinflusst.

Die Betriebsergebnisse können auch als "Betriebsstichproben" angesehen werden, z.B. wenn die Datentypen und die hiermit verbundenen Betriebsszenarien zufällig bestimmt oder ausgewählt werden. Das Verfahren kann jedoch auch vollständig deterministisch ausgestaltet sein, indem z.B. alle relevanten Datentypen und Betriebseigenschaften verwendet werden. Dass Mittel kann somit auch unter Verwendung von mehr als zwei Datentypen betrieben werden, wobei der Vergleich der entsprechenden Betriebsergebnisse nicht auf den Vergleich von lediglich zwei Betriebsergebnissen beschränkt ist.

Das erste Betriebsergebnis und das zweite Betriebsergebnis können zum Beispiel jeweils durch einen Zahlenwert gebildet oder repräsentiert werden. Der jeweilige Zahlenwert kann das Ergebnis einer Berechnung sein, die in dem betreffenden Datentyp ausgeführt wurde. Je nach Datentyp können die Betriebsergebnisse aber auch als Zeichen oder andere Datenformen vorliegen.

Die Tatsache, dass die beiden Betriebsergebnisse unter Verwendung von einem ersten und einem zweiten Datentyp (die vorzugsweise voneinander verschieden sind) ermittelt werden, bedeutet nicht zwangsläufig, dass die Betriebsergebnisse in voneinander verschiedenen Datentypen verglichen werden. So ist es auch möglich, dass die Betriebsergebnisse in demselben Datentyp miteinander verglichen werden. Hierdurch können der Vergleich und die Definition des Prüfkriteriums vereinfacht werden.

Das Verfahren ermöglicht allgemein den Einsatz von Standard-Software und - Hardware. Somit können bei Verwendung des Verfahrens insbesondere auch zentrale Server mit sicherheitskritischen Berechnungen oder Datenabspeicherungen betraut werden ("Cloudanwendungen"), ohne dass hierfür weitere Sicherheitsvorkehrungen wie eine Hardwareredundanz notwendig sind. Ferner können für den Betrieb von potentiell gefährlichen Maschinen Datenverarbeitungsanlagen vorgesehen werden, die teilweise oder sogar ausschließlich aus Standardkomponenten aufgebaut sind. Beispielsweise können Standard-SPS-Systeme ohne eine spezielle und teure Sicherheitssteuerung verwendet werden.

Im Fehlerfall kann ein betreffendes Datenverarbeitungsmittel schnell ausgetauscht werden, insbesondere wenn es sich um ein standardisiertes Bauteil mit hochgradiger Verfügbarkeit handelt. Das Verfahren ermöglicht somit den Abbau von Komplexität, die für sicherheitskritische Anwendungen jedoch bislang unumgänglich war. Das Verfahren kann sowohl zur Überprüfung von Hardware als auch zur Überprüfung von Software eingesetzt werden. Somit wird mit nur einem Verfahren eine ganzheitliche Überprüfung von elektronischen Datenverarbeitungsmitteln ermöglicht.

Erfindungsgemäß umfasst das Betreiben des Mittels unter Verwendung des ersten Datentyps ein Verarbeiten eines ersten Werts des ersten Datentyps. Ferner umfasst das Betreiben des Mittels unter Verwendung des zweiten Datentyps ein Erzeugen und Verarbeiten eines zweiten Werts des zweiten Datentyps, wobei der zweite Wert des zweiten Datentyps erzeugt wird, indem der erste Wert des ersten Datentyps unter Verwendung einer ersten Transformationsfunktion in den zweiten Wert des zweiten Datentyps transformiert wird.

Ein Wert eines Datentyps kann allgemein ein Zahlenwert (z.B. in der Einheit Bit) aus einem definierten Wertebereich des Datentyps sein. Ein Wert kann aber auch ein Element eines Zeichensatzes (Datentyp "Zeichen") oder ein logischer Wert sein (Datentyp "Boolean"). Ein Wert eines Datentyps entspricht somit allgemein einem Exemplar oder einer Instanz des Datentyps.

Das Verfahren kann allgemein auf der Grundlage des ersten Wertes durchgeführt werden. Der erste Wert kann im Zuge eines beliebigen oder spezifischen Datenverarbeitungsvorgangs bereits erzeugt worden sein. Es ist aber auch möglich, dass der erste Wert explizit zum Überprüfen des Mittels erzeugt wird.

Die erste Transformationsfunktion dient allgemein dazu, den ersten Wert in den zweiten Wert zu überführen. Auf diese Weise kann der zweite Wert direkt erzeugt werden, wenn der erste Wert vorliegt und das Verfahren durchgeführt werden soll.

Der zweite Wert kann allgemein dahingehend aufgefasst werden, dass dieser den ersten Wert im zweiten Datentyp repräsentiert. Insofern entspricht der zweite Wert einem ersten Wert des zweiten Datentyps, der dem ersten Wert des ersten Datentyps entspricht. Zur leichteren Unterscheidung zwischen den beiden Werten wird jedoch der erste Wert dem erste Datentyp und der zweite Wert dem zweiten Datentyp zugeordnet.

Der erste Wert des ersten Datentyps wird unter Verwendung einer ersten Berechnungsfunktion verarbeitet, um ein erstes Berechnungsergebnis zu erhalten, welches das erste Betriebsergebnis in dem ersten Datentyp repräsentiert. Entsprechend wird der zweite Wert des zweiten Datentyps unter Verwendung einer zweiten Berechnungsfunktion verarbeitet, um ein zweites Berechnungsergebnis zu erhalten, welches das zweite Betriebsergebnis in dem zweiten Datentyp repräsentiert. Die erste Berechnungsfunktion und die zweite Berechnungsfunktion sind hierbei äquivalent, d.h. die beiden Berechnungsfunktionen entsprechen einander. Äquivalenz bedeutet hierbei nicht zwangsläufig, dass die Berechnungsfunktionen völlig identisch sind und beispielsweise völlig deckungsgleiche Programmanweisungen umfassen. Vielmehr können sich die jeweiligen Programmanweisungen voneinander unterscheiden, um in Abhängigkeit des jeweiligen Datentyps eine Operation auszuführen, die jedoch aus konzeptioneller bzw. mathematischer Sicht zwischen den Berechnungsfunktionen gleich ist. Beispielsweise können die beiden Berechnungsfunktionen jeweils eine Multiplikation definieren. Die Multiplikation kann jedoch in dem Datentyp "ganze Zahlen" durch Programmanweisungen implementiert sein, die sich von denjenigen in dem Datentyp "Gleitkommazahlen" unterscheiden. Auf diese Weise können bei der Ermittlung der beiden Betriebsergebnisse unterschiedliche Programmanweisungen (d.h. allgemein Eigenschaften des Mittels) zum Tragen kommen, die die Überprüfung des Mittels ermöglichen.

Vorteilhafte Ausführungsformen können der Beschreibung, den abhängigen Ansprüchen sowie den Zeichnungen entnommen werden.

Die erste Berechnungsfunktion kann allgemein einer ersten Funktionsbibliothek zum Betreiben des Mittels angehören, welche dem ersten Datentyp zugeordnet ist. Entsprechend kann die zweite Berechnungsfunktion einer zweiten Funktionsbibliothek zum Betreiben des Mittels angehören, welche dem zweiten Datentyp zugeordnet ist. Mit anderen Worten können die beiden Berechnungsfunktionen aus voneinander verschiedenen Funktionsbibliotheken stammen, die den jeweiligen Datentypen zugeordnet sind.

Wie bereits oben angedeutet wird für einen betreffenden Datentyp regelmäßig ein Satz von Operationen definiert, die für die Verarbeitung des Datentyps vorgesehen ist. Diese Operationen können insbesondere Berechnungsfunktionen umfassen, die in einer Funktionsbibliothek zusammengefasst sind. Eine betreffende Berechnungsfunktion kann in der zugeordneten Funktionsbibliothek einen Fehler aufweisen, der z.B. durch einen Programmierfehler verursacht wurde. Die äquivalente Berechnungsfunktion in einer anderen Funktionsbibliothek kann jedoch fehlerfrei sein. Durch Verwendung beider Berechnungsfunktionen kann der Fehler allerdings zuverlässig aufgedeckt werden.

Durch die Trennung zwischen Funktionsbibliotheken kann sichergestellt werden, dass niemals die identische Berechnungsfunktion zur Ermittlung der beiden Betriebsergebnisse zum Einsatz kommt. Ferner können die Berechnungsfunktionen im Rahmen einer regelmäßigen Überprüfung zufällig oder gezielt variiert werden, sodass zumindest ein wesentlicher Teil oder sogar sämtliche Berechnungsfunktionen einer jeweiligen Funktionsbibliothek bezüglich etwaiger Fehler überprüft werden können.

Gemäß der Erfindung wird das erste Berechnungsergebnis unter Verwendung der ersten Transformationsfunktion transformiert, wobei das transformierte erste Berechnungsergebnis das erste Betriebsergebnis in dem zweiten Datentyp repräsentiert, und wobei das wenigstens eine Prüfkriterium eine Äquivalenz des ersten Betriebsergebnisses und des zweiten Betriebsergebnisses in dem zweiten Datentyp umfasst. Die Betriebsergebnisse werden somit in demselben Datentyp miteinander verglichen. Hierdurch kann der Vergleich besonders robust bzw. zuverlässig durchgeführt werden, da keine komplizierten Umrechnungs- oder Vergleichsmodalitäten zwischen unterschiedlichen Datentypen definiert werden müssen. Stattdessen wird das erste Berechnungsergebnis vorteilhaft mittels der ersten Transformationsfunktion in den zweiten Datentyp transformiert. Die Tatsache, dass für die Transformation des ersten Werts und des ersten Berechnungsergebnisses jeweils die gleiche Funktion vorgesehen ist, reduziert einerseits die für das Verfahren erforderliche Datenmenge, andererseits kann sich dies auch positiv im Hinblick auf die Zuverlässigkeit des Verfahrens auswirken (zuverlässige Erkennung von Fehlern).

Gemäß einer weiteren bevorzugten Ausführungsform kann das zweite Berechnungsergebnis unter Verwendung einer zweiten Transformationsfunktion transformiert werden. Die zweite Transformationsfunktion entspricht vorzugsweise einer Umkehrung oder Invertierung der ersten Transformationsfunktion. Dementsprechend repräsentiert das transformierte zweite Berechnungsergebnis das zweite Betriebsergebnis vorzugsweise in dem ersten Datentyp. Die beiden Betriebsergebnisse liegen dann jeweils in dem ersten Datentyp vor, sodass die beiden Betriebsergebnisse in dem ersten Datentyp auf ihre Äquivalenz überprüft werden können. Mit anderen Worten kann das wenigstens eine Prüfkriterium eine Äquivalenz des ersten Betriebsergebnisses und des zweiten Betriebsergebnisses in dem ersten Datentyp umfassen.

Vorzugsweise umfasst das Prüfkriterium eine Äquivalenz des ersten Betriebsergebnisses und des zweiten Betriebsergebnisses in dem ersten und dem zweiten Datentyp. Somit kann das Prüfkriterium zwei Äquivalenzprüfungen umfassen. Mit anderen Worten wird das Prüfkriterium nur dann nicht verletzt, wenn zumindest die beiden Äquivalenzprüfungen positiv sind (d.h. die Betriebsergebnisse sind in beiden Datentypen gleich). Sobald die Äquivalenz in einem der beiden Datentypen nicht gegeben ist, wird das Prüfkriterium verletzt. Das Prüfverfahren kann auf diese Weise eine besonders hohe Prüftiefe aufweisen, die die Wahrscheinlichkeit zur Entdeckung von Fehlern erhöht und auch zu einer höheren Prüfeffizienz beiträgt, da die Betriebsergebnisse mehrfach zur Prüfung herangezogen werden können.

Zum Feststellen einer Äquivalenz des ersten Betriebsergebnisses und des zweiten Betriebsergebnisses können allgemein das erste Betriebsergebnis und das zweite Betriebsergebnis in demselben Datentyp unter Verwendung wenigstens eines vorbestimmten Schwellenwerts miteinander verglichen werden. Die Äquivalenz des ersten Betriebsergebnisses und des zweiten Betriebsergebnisses kann hierbei insbesondere dann als verletzt angesehen werden, wenn eine vorbestimmte Relation zwischen dem ersten Betriebsergebnis und dem zweiten Betriebsergebnis den wenigstens einen vorbestimmten Schwellenwert überschreitet. Die vorbestimmte Relation kann insbesondere eine Differenz oder ein Quotient zwischen den Betriebsergebnissen sein. Im Falle vorzeichenbehafteter Betriebsergebnisse ist es auch denkbar nur den jeweiligen Betrag zu berücksichtigen.

Es versteht sich, dass der Vergleich mittels Schwellenwert leicht implementiert werden kann und dementsprechend Vorteile bietet. Ferner kann mittels Schwellenwert ein Toleranzbereich definiert werden, um Fehlalarme aufgrund vernachlässigbarer Betriebsabweichungen zu vermeiden. Es ist jedoch auch möglich, komplexere Definitionen einer Äquivalenz vorzusehen, insbesondere in Abhängigkeit vom Datentyp, in dem die beiden Betriebsergebnisse miteinander vergleichen werden sollen. So ist es denkbar, eine Anzahl von Klassen zu definieren, die jeweils einen Bereich von erwartbaren Abweichungen zwischen den Betriebsergebnissen repräsentieren. Der Vergleich zwischen den Betriebsergebnissen kann somit eine Identifizierung derjenigen Klasse umfassen, in welche die Abweichung fällt. In Abhängigkeit der identifizierten Klasse kann dann entschieden werden, ob das Prüfkriterium verletzt ist, d.h. das Prüfkriterium kann in Abhängigkeit einer Fehlerklassifikation definiert sein.

Anders als in der beanspruchten Erfindung könnte das Verfahren zumindest teilweise auf einem zentralen Server ausgeführt werden. Dieser kann wie bereits angedeutet aus Standardkomponenten aufgebaut sein, wobei eine Doppelung der Komponenten nicht erforderlich ist, um einen zuverlässigen Betrieb zu gewährleisten. Es ist mit dem Verfahren somit ohne Sicherheitseinbußen möglich, sicherheitskritische Datenverarbeitungen auf zentrale oder sonstige Server auszulagern. Entsprechende Rechenkapazitäten müssen nicht mehr unmittelbar an einer zu betreibenden Vorrichtung vorgehalten werden, sondern können eingespart werden.

Ein solcher zentraler Server (auch in Form eines einfachen Standard-PCs) kann insbesondere zum Betreiben einer Sensorvorrichtung verwendet werden, die aus Sicherheitsgründen fehlerfrei funktionieren muss. Das zu überprüfende Mittel zur Datenverarbeitung kann an dem Server und/oder der Sensorvorrichtung verwendet werden. Ein Vorteil des vorgeschlagenen Prüfverfahrens besteht somit darin, dass es flexibel und im Wesentlichen unabhängig von dem Ort des zu überprüfenden Mittels durchgeführt werden kann. Somit eignet sich das Verfahren hervorragend für vernetzte Systeme, die insbesondere auch in industriellen Fabrikumgebungen zunehmend Verbreitung finden.

Im Hinblick auf den genannten Anwendungsfall einer Sensorvorrichtung, aber auch im Allgemeinen kann die erste Berechnungsfunktion unmittelbar eine zum Betreiben der Sensorvorrichtung benötigte Funktion sein. Diese kann insbesondere sicherheitsrelevant und somit prädestiniert für eine Überprüfung sein. Alternativ können z.B. regelmäßig alle potentiell relevanten Berechnungsfunktionen überprüft werden.

Gemäß einer Ausführungsform kann das Mittel zur Datenverarbeitung Hardware, insbesondere ein elektronisches Rechenwerk, vorzugsweise eine arithmetisch-logische Einheit, umfassen. Ferner kann das Mittel Software umfassen. Diese kann insbesondere eine erste Funktionsbibliothek für den ersten Datentyp und eine zweite Funktionsbibliothek für den zweiten Datentyp aufweisen, wobei die erste Funktionsbibliothek und die zweite Funktionsbibliothek jeweils wenigstens eine Berechnungsfunktion aufweisen, die zueinander äquivalent sind. Es versteht sich, dass sowohl die Berechnungsfunktionen als auch die Funktionsbibliotheken den weiter oben verwendeten Berechnungsfunktionen bzw. Funktionsbibliotheken entsprechen können.

Der erste Datentyp und der zweite Datentyp können sich generell dadurch voneinander unterscheiden, dass das Mittel bei dem Betreiben unter Verwendung des ersten Datentyps und des zweiten Datentyps bezüglich unterschiedlicher Betriebseigenschaften des Mittels verwendet wird. Hierdurch kann die Effektivität des Verfahrens gesteigert werden. Eine Betriebseigenschaft ist allgemein eine Funktionseigenschaft bzw. Funktionalität des Mittels, die durch einen zugeordneten Datentyp aktivierbar ist. Beispielsweise kann das Mittel eine ALU sein, wobei eine erste Betriebseigenschaft deren Fähigkeit zur Verarbeitung von ganzen Zahlen (erster Datentyp) und eine zweite Betriebseigenschaft deren Fähigkeit zur Verarbeitung von Kommazahlen (zweiter Datentyp) repräsentiert.

Es hat sich gezeigt, dass das Verfahren vorteilhaft mit bestimmten Kombinationen von Datentypen funktioniert. Beispielsweise kann der erste Datentyp dazu ausgebildet sein, Gleitkommazahlen zu repräsentieren und wobei der zweite Datentyp dazu ausgebildet sein kann, ganze Zahlen zu repräsentieren. So kann der erste Datentyp "double" und der zweite Datentyp "long long" sein. Je nach Programmiersprache können die Datentypen anders bezeichnet sein.

Gemäß einer weiteren Ausführungsform kann das wenigstens eine Mittel einen Speicher aufweisen, der durch das Verfahren überprüft werden soll. Hierbei kann ein erster Wert des ersten Datentyps durch ein erstes Binärwort und ein zweiter Wert des zweiten Datentyps durch ein zweites Binärwort repräsentiert werden, wobei das zweite Binärwort auf der Grundlage des ersten Binärworts erzeugt werden kann, indem zumindest ein Teil der Bits des ersten Binärworts unter Verwendung einer Invertierungsregel invertiert wird. Das Betreiben des Mittels unter Verwendung des ersten Datentyps umfasst dann vorzugsweise ein Abspeichern des ersten Binärworts in dem Speicher, wobei das abgespeicherte erste Binärwort dem ersten Betriebsergebnis entspricht. Entsprechend kann das Betreiben des Mittels unter Verwendung des zweiten Datentyps ein Abspeichern des zweiten Binärworts in dem Speicher umfassen, wobei das abgespeicherte zweite Binärwort dem zweiten Betriebsergebnis entspricht. Das Vergleichen des ersten Betriebsergebnisses und des zweiten Betriebsergebnisses kann erfolgen, indem zumindest ein Teil der Bits des ersten oder zweiten Binärworts unter Verwendung der Invertierungsregel invertiert wird, wobei das erste Binärwort mit dem zweiten Binärwort verglichen wird. Das Prüfkriterium umfasst hierbei vorzugsweise die Übereinstimmung des ersten und zweiten Binärworts.

Das "gezielte" Abspeichern unterschiedlicher Binärwörter dient dem Zweck, Speicherfehler aufzudecken, die sich insbesondere in einer systematischen oder zufälligen Invertierung von Bits manifestieren. Sofern der Speicher fehlerfrei funktioniert, werden die Bits trotz der doppelten bitweisen Invertierung stets richtig abgespeichert. Im Falle eines Fehlers führt eine ungewollte Bitinvertierung jedoch zu einer Abweichung zwischen dem ersten und zweiten Binärwort, die den Speicherfehler anzeigt. Das Abspeichern und Prüfen der zwei Binärwörter kann in regelmäßigen zeitlichen Abständen erfolgen, um z.B. auch alterungsbedingte Speicherfehler zuverlässig aufzudecken. Ein Binärwort ist allgemein die binäre Repräsentierung eines Werts eines Datentyps auf Speicherebene, wobei der Wert sowohl ein Zahlenwert als auch ein Zeichen sein kann. Ein Binärwort kann hierzu eine Anzahl von Bits umfassen, die jeweils den Wert Null oder Eins annehmen können. Eine Transformation eines betreffenden Werts in ein Binärwort kann mit Hilfe von bekannten Kodierschemata (z.B. ein Kodierschema zur eindeutigen Umrechnung eines Dezimalwerts in einen Binärwert) durchgeführt werden.

Die Erfindung bezieht sich allgemein auf eine Vorrichtung mit einer elektronischen Datenverarbeitungsanlage, die wenigstens ein Mittel zur elektronischen Datenverarbeitung aufweist, wobei die Vorrichtung dazu ausgebildet ist, das Mittel zu überprüfen, indem die Vorrichtung das hierin beschriebenene Verfahren durchführt.

Die Vorrichtung kann z.B. durch eine industrielle Maschine mit erhöhten Sicherheitsanforderungen gebildet sein. Die Maschine kann zum Teil redundant (z.B. redundante elektrische Eingänge) ausgebildet sein, um die Sicherheit zusätzlich zu dem Überprüfungsverfahren noch weiter zu erhöhen.

Die Vorrichtung kann wenigstens einen Sensor zur Überwachung eines Überwachungsbereichs aufweisen, wobei Daten des Sensors unter Verwendung des Mittels verarbeitet werden, um festzustellen, ob der Überwachungsbereich verletzt ist. Die erhöhten Sicherheitsanforderungen, die sich aus der Überwachungsfunktion der Vorrichtung ergeben, betreffen somit unmittelbar das zu überprüfende Mittel. Das Verfahren kann also gezielt für diejenigen Mittel eingesetzt werden, an die erhöhte Sicherheitsanforderungen gestellt werden müssen.

Nach einer Ausführungsform der Vorrichtung können die Daten des Sensors und/ oder die verarbeiteten Daten des Sensors wenigstens einen ersten Wert eines ersten Datentyps umfassen, wobei der erste Wert nicht für die Feststellung einer Verletzung des Überwachungsbereichs verwendet wird, wenn das Prüfkriterium gemäß dem Verfahren nach einem der hier beschriebenen Ausführungsformen in Abhängigkeit von dem ersten Wert verletzt ist. Mit anderen Worten kann das Verfahren unmittelbar in die Datenverarbeitung der Vorrichtung integriert werden. Der erste Wert kann mit der im Rahmen des Prüfverfahrens vorgesehenen ersten Berechnungsfunktion verarbeitet werden. Somit kann unmittelbar diejenige Berechnungsfunktion bei der Überprüfung verwendet werden, auf deren korrekte Funktionsweise es ankommt.

Im Falle eines verletzten Prüfkriteriums kann z.B. ein Alarmsignal erzeugt und an einen vorbestimmten Empfänger gesendet werden (z.B. einen Benutzer oder eine weitere Datenverarbeitungsanlage). Ferner können automatische Notmaßnahmen getroffen werden, wie etwa ein automatisches Abschalten der Vorrichtung, insbesondere in Form eines "Nothalts". Der Verlust an Sicherheit, der sich aus dem verletzten Prüfkriterium ergibt, kann somit unmittelbar zu einer automatisch ausgelösten Gegenmaßnahme führen. Je nach betroffenem Mittel können auch unterschiedliche Maßnahmen getroffen werden. So kann beispielsweise im Falle eines geringen Fehlers (z.B. eines Speicherfehlers) lediglich ein Signal in Form einer Nachricht (Warnmeldung) erzeugt werden. Ist hingegen z.B. eine ALU betroffen, so kann automatisch ein Notsignal erzeugt werden, durch welches z.B. der erwähnte Nothalt der Vorrichtung ausgelöst werden kann.

Die Erfindung wird nachfolgend lediglich rein beispielhaft anhand der Zeichnungen erläutert, in denen:
- Fig. 1: ein Blockdiagramm zur Veranschaulichung der Grundzüge des Verfahrens gemäß Fig. 2 zeigt;
- Fig. 2: eine Übersicht von Datenverarbeitungsschritten zur Veranschaulichung des Verfahrens nach einer Ausführungsform zeigt; und
- Fig. 3: ein Blockdiagramm zur Veranschaulichung des Verfahrens nach Fig. 2 zeigt.

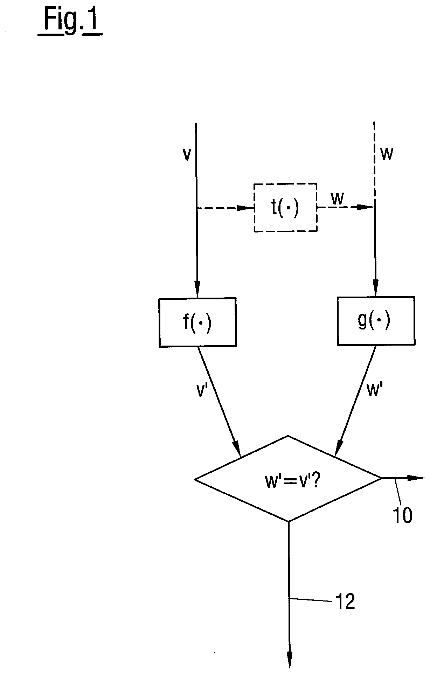

Ein Verfahren zum Überprüfen des Betriebs eines Mittels zur elektronischen Datenverarbeitung (nicht gezeigt) ist allgemein in Fig. 1 veranschaulicht. Das Verfahren beginnt mit einem ersten Wert v eines ersten Datentyps (z.B. ganze Zahl) und einem zweiten Wert w eines zweiten Datentyps (z.B. Gleitkommazahl). Der erste Wert v wird mittels einer ersten Transformationsfunktion t in den zweiten Wert w überführt.

Das zu überprüfende Mittel, welches z.B. eine ALU eines Standard PCs sein kann, wird nun unter Verwendung des ersten Datentyps betrieben, indem der erste Wert mit einer ersten Berechnungsfunktion f verarbeitet wird, um ein erstes Berechnungsergebnis v' zu erhalten, welches ein erstes Betriebsergebnis des Mittels in dem ersten Datentyp repräsentiert. Der Datentyp des ersten Berechnungsergebnisses v' und des ersten Werts ist also identisch.

Der zweite Wert w wird analog zu dem ersten Wert v durch eine zweite Berechnungsfunktion g und unter Verwendung des Mittels verarbeitet, um ein zweites Berechnungsergebnis w' zu erhalten, welches ein zweites Betriebsergebnis des Mittels in dem zweiten Datentyp repräsentiert. Der Datentyp des zweiten Berechnungsergebnisses w' und des zweiten Werts w ist wiederum identisch.

Das erste Betriebsergebnis und das zweite Betriebsergebnis werden unter Verwendung eines Prüfkriteriums miteinander verglichen. Dies geschieht vorzugsweise durch Vergleich des ersten Berechnungsergebnisses v' und des zweiten ersten Berechnungsergebnisses w'. Das Prüfkriterium kann allgemein eine Äquivalenz zwischen den Berechnungsergebnissen v' und w' sein. Dies ist in Fig. 1 durch w'=v'? angedeutet. Wenn die Berechnungsergebnisse v' und w' äquivalent sind (d.h. w'=v'), ist das Prüfkriterium nicht verletzt und es kann von einer korrekten Funktionsweise des Mittels ausgegangen werden (Schritt 10). Wenn die Berechnungsergebnisse v' und w'jedoch nicht äquivalent sind (d.h. w'≠v'), ist das Prüfkriterium verletzt und es kann nicht von einer korrekten Funktionsweise des Mittels ausgegangen werden (Schritt 12). In letzterem Fall ergibt das Prüfverfahren somit, dass ein Fehler des Mittels vorliegt und es wird ein Signal erzeugt, um die automatische Einleitung geeigneter Abhilfemaßnahmen zu ermöglichen.

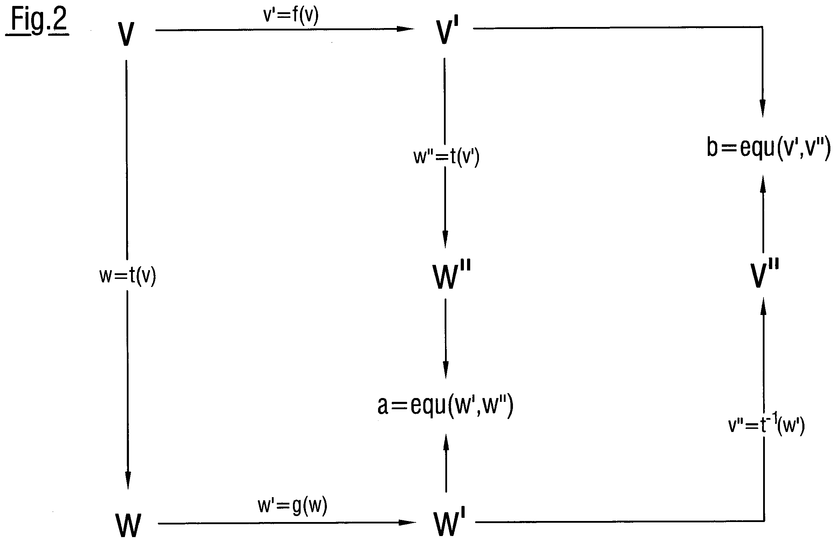

Anhand von Fig. 2 wird nun eine Erweiterung des Verfahrens von Fig. 1 erläutert. Das Verfahren beginnt von links wiederum mit dem ersten Wert v und dem zweiten Wert w, die sich jeweils bezüglich ihres Datentyps voneinander unterscheiden. Die Ermittlung des ersten Berechnungsergebnisses v' und des zweiten Berechnungsergebnisses w' erfolgt wiederum durch die äquivalenten Berechnungsfunktionen f und g. Die Erweiterung des Verfahrens besteht nun einerseits darin, dass das erste Berechnungsergebnis v' mit Hilfe der ersten Transformationsfunktion t in ein transformiertes erstes Berechnungsergebnis w" überführt wird, welches jedoch im Gegensatz zum untransformierten Berechnungsergebnis v' im zweiten Datentyp vorliegt (was durch das w angedeutet wird). Andererseits wird das zweite Berechnungsergebnis w' mit Hilfe einer zweiten Transformationsfunktion t⁻¹ in ein transformiertes zweites Berechnungsergebnis überführt, das nunmehr im ersten Datentyp vorliegt. Die zweite Transformationsfunktion t⁻¹ entspricht einer Umkehrung der ersten Transformationsfunktion t.

Das erste Berechnungsergebnis v' sowie das transformierte zweite Berechnungsergebnis v" werden nun auf ihre Äquivalenz überprüft, was in Fig. 2 durch equ(v', v") angedeutet wird. Ferner werden das zweite Berechnungsergebnis w' sowie das transformierte erste Berechnungsergebnis w" auf Äquivalenz überprüft, was in Fig. 2 durch equ(w', w") angedeutet wird. Beide Äquivalenzprüfungen umfassen jeweils einen Vergleich des ersten Betriebsergebnisses und des zweiten Betriebsergebnisses, wobei die Betriebsergebnisse jedoch einmal im ersten Datentyp (Fall equ(v', v")) und einmal im zweiten Datentyp (equ(w', w")) miteinander verglichen werden. Zum Überprüfen des Mittels wäre im Prinzip einer dieser Vergleiche ausreichend, um einen Fehler festzustellen. Das Durchführen beider Vergleiche kann jedoch für eine erhöhte Prüfzuverlässigkeit für besonders sicherheitsrelevante Mittel vorgesehen werden. Das Prüfkriterium kann also derart definiert sein, dass die Äquivalenz der Betriebsergebnisse in beiden Datentypen gegeben sein muss, um eine fehlerfreie Funktion des Mittels festzustellen.

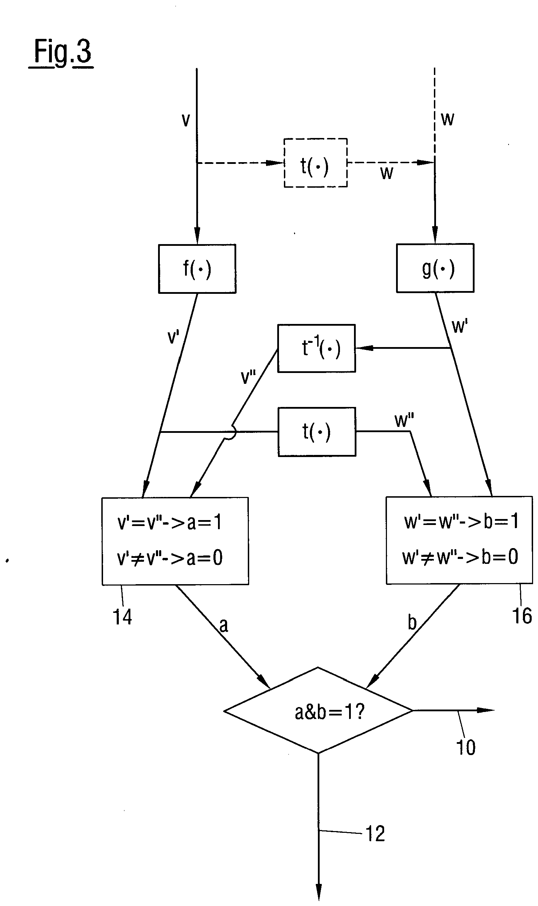

Das anhand von Fig. 2 erläuterte Vorgehen ist in Fig. 3 für den Fall dargestellt, dass die Betriebsergebnisse jeweils in dem ersten Datentyp und in dem zweiten Datentyp auf Äquivalenz geprüft werden. Der erste Vergleich findet in dem Block 14 statt, wobei die Variable a im Falle der Äquivalenz von v' und v" auf 1 und andernfalls auf 0 gesetzt wird. Es versteht sich, dass dies auch umgekehrt sein kann. Der zweite Vergleich findet in dem Block 16 statt, wobei die Variable b im Falle der Äquivalenz von w' und w" auf 1 und andernfalls auf 0 gesetzt wird. Auch hier versteht sich, dass dies auch umgekehrt sein kann.

Das eigentliche Prüfkriterium des in Fig. 3 veranschaulichten Verfahrens kann nun dergestalt definiert sein, dass die beiden Variablen a und b beide auf 1 gesetzt sein müssen, um von einer fehlerfreien Funktion des Mittels ausgehen zu können (Schritt 10). Andernfalls wird ein Signal erzeugt, welches einen Fehler des Mittels anzeigt oder automatisch zu einer Abschaltung einer Vorrichtung führt, zu dessen Betrieb das Mittel verwendet wird. Die Vorrichtung kann beispielsweise eine Maschine mit erhöhten Sicherheitserfordernissen sein, in der das Mittel verbaut ist.

Es versteht sich, dass das Prüfkriterium beispielsweise so definiert sein kann, dass eine Differenz oder ein Quotient mit einem Schwellwert verglichen wird. Im Fall von Fig. 3 kann dies z.B. durch a-b<c oder c'<a/b<c" definiert sein. Analog kann auch die Äquivalenz zwischen den Betriebsergebnissen v', v", w', w" festgestellt werden. Ein Schwellwertvergleich besitzt den Vorteil, dass geringfügige Abweichungen zwischen den Variablen oder den Betriebsergebnissen, die zum Beispiel durch Rundungseffekte oder irrelevante Minimalfehler verursacht sein können, bei geeignet gewähltem Schwellenwert nicht zu einer Verneinung der Äquivalenz und dementsprechend zu einem Fehlalarm führen.

### Bezugszeichenliste

- Schritt: 10
- Schritt: 12
- Block: 14
- Block: 16
- v: erster Wert
- w: zweiter Wert
- v': erstes Berechnungsergebnis
- w': zweites Berechnungsergebnis
- v": transformiertes erstes Berechnungsergebnis
- w": transformiertes zweites Berechnungsergebnis
- t: erste Transformationsfunktion
- t⁻¹: zweite Transformationsfunktion
- f: erste Berechnungsfunktion
- g: zweite Berechnungsfunktion

## Patentansprüche

1. Vorrichtung mit einer elektronischen Datenverarbeitungsanlage, die wenigstens ein Mittel zur elektronischen Datenverarbeitung aufweist, wobei die Vorrichtung dazu ausgebildet ist, ein Verfahren zum Überprüfen eines Betriebs des wenigstens eines Mittels durchzuführen, wobei das Verfahren umfasst:
- Betreiben des Mittels unter Verwendung eines ersten Datentyps, um ein erstes Betriebsergebnis zu erhalten, wobei das Betreiben des Mittels unter Verwendung des ersten Datentyps ein Verarbeiten eines ersten Werts (v) des ersten Datentyps unter Verwendung einer ersten Berechnungsfunktion (f) umfasst, um ein erstes Berechnungsergebnis (v') zu erhalten, welches das erste Betriebsergebnis in dem ersten Datentyp repräsentiert;
- Betreiben des Mittels unter Verwendung eines zweiten Datentyps, um ein zweites Betriebsergebnis zu erhalten, wobei das Betreiben des Mittels unter Verwendung des zweiten Datentyps ein Erzeugen eines zweiten Werts (w) und ein Verarbeiten des zweiten Werts (w) des zweiten Datentyps unter Verwendung einer zu der ersten Berechnungsfunktion (f) äquivalenten zweiten Berechnungsfunktion (g) umfasst, um ein zweites Berechnungsergebnis (w') zu erhalten, welches das zweite Betriebsergebnis in dem zweiten Datentyp repräsentiert;
- Vergleichen des ersten Betriebsergebnisses und des zweiten Betriebsergebnisses unter Verwendung wenigstens eines vordefinierten Prüfkriteriums; und
- Erzeugen eines Signals (12), wenn das wenigstens eine vordefinierte Prüfkriterium verletzt ist,
**dadurch gekennzeichnet, dass**
der zweite Wert (w) des zweiten Datentyps erzeugt wird, indem der erste Wert (v) des ersten Datentyps unter Verwendung einer ersten Transformationsfunktion (t) in den zweiten Wert (w) des zweiten Datentyps transformiert wird;
das erste Berechnungsergebnis (v') unter Verwendung der ersten Transformationsfunktion (t) transformiert wird, wobei das transformierte erste Berechnungsergebnis (w") das erste Betriebsergebnis in dem zweiten Datentyp repräsentiert;
das erste Betriebsergebnis und das zweite Betriebsergebnis verglichen werden, indem das transformierte erste Berechnungsergebnis (w") und das zweite Berechnungsergebnis (w') auf Äquivalenz überprüft werden; und die Vorrichtung wenigstens einen Sensor zur Überwachung eines Überwachungsbereichs aufweist, wobei Daten des Sensors unter Verwendung des Mittels verarbeitet werden, um festzustellen, ob der Überwachungsbereich verletzt ist.

2. Vorrichtung nach Anspruch 1,
wobei die erste Berechnungsfunktion (f) einer ersten Funktionsbibliothek zum Betreiben des Mittels angehört, welche dem ersten Datentyp zugeordnet ist, und
wobei die zweite Berechnungsfunktion (g) einer zweiten Funktionsbibliothek zum Betreiben des Mittels angehört, welche dem zweiten Datentyp zugeordnet ist.

3. Vorrichtung nach einem der Ansprüche 1 bis 2,
wobei das zweite Berechnungsergebnis (w') unter Verwendung einer zweiten Transformationsfunktion (t⁻¹) transformiert wird, die einer Umkehrung der ersten Transformationsfunktion (t) entspricht, wobei das transformierte zweite Berechnungsergebnis (v") das zweite Betriebsergebnis in dem ersten Datentyp repräsentiert, und
wobei das wenigstens eine Prüfkriterium eine Äquivalenz des ersten Betriebsergebnisses und des zweiten Betriebsergebnisses in dem ersten Datentyp umfasst.

4. Vorrichtung nach Anspruch 3, wobei, zum Feststellen einer Äquivalenz des ersten Betriebsergebnisses und des zweiten Betriebsergebnisses, das erste Betriebsergebnis und das zweite Betriebsergebnis in demselben Datentyp unter Verwendung wenigstens eines vorbestimmten Schwellenwerts miteinander verglichen werden, und wobei die Äquivalenz des ersten Betriebsergebnisses und des zweiten Betriebsergebnisses verletzt ist, wenn eine vorbestimmte Relation zwischen dem ersten Betriebsergebnis und dem zweiten Betriebsergebnis den wenigstens einen vorbestimmten Schwellenwert überschreitet.

5. Vorrichtung nach einem der vorhergehenden Ansprüche, wobei das Verfahren zumindest teilweise auf einem zentralen Server ausgeführt wird, welcher zum Betreiben einer Sensorvorrichtung verwendet wird, wobei der Server und/oder die Sensorvorrichtung das wenigstens eine Mittel aufweist.

6. Vorrichtung nach einem der vorhergehenden Ansprüche, wobei das Mittel Hardware, insbesondere ein elektronisches Rechenwerk, vorzugsweise eine arithmetisch-logische Einheit, umfasst und/oder
wobei das Mittel Software umfasst, insbesondere wobei die Software eine erste Funktionsbibliothek für den ersten Datentyp und eine zweite Funktionsbibliothek für den zweiten Datentyp aufweist, wobei die erste Funktionsbibliothek und die zweite Funktionsbibliothek jeweils wenigstens eine Berechnungsfunktion aufweisen, die zueinander äquivalent sind.

7. Vorrichtung nach einem der vorhergehenden Ansprüche, wobei sich der erste Datentyp und der zweite Datentyp voneinander dadurch unterscheiden, dass das Mittel bei dem Betreiben unter Verwendung des ersten Datentyps und des zweiten Datentyps bezüglich unterschiedlicher Betriebseigenschaften des Mittels verwendet wird.

8. Vorrichtung nach einem der vorhergehenden Ansprüche, wobei der erste Datentyp dazu ausgebildet ist, Gleitkommazahlen zu repräsentieren und wobei der zweite Datentyp dazu ausgebildet ist, ganze Zahlen zu repräsentieren.

## Claims

1. An apparatus comprising an electronic data processing system which has at least one means for electronic data processing, wherein the apparatus is configured to perform a method of checking an operation of the at least one means, wherein the method comprises:
- operating the means using a first data type to obtain a first operating result, wherein the operation of the means using the first data type comprises processing a first value (v) of the first data type using a first calculation function (f) to obtain a first calculation result (v') which represents the first operating result in the first data type;
- operating the means using a second data type to obtain a second operating result, wherein the operation of the means using the second data type comprises generating a second value (w) and processing the second value (w) of the second data type using a second calculation function (g) equivalent to the first calculation function (f) to obtain a second calculation result (w') which represents the second operating result in the second data type;
- comparing the first operating result and the second operating result using at least one predefined test criterion; and
- generating a signal (12) when the at least one predefined test criterion is infringed,
**characterized in that**
the second value (w) of the second data type is generated by transforming the first value (v) of the first data type into the second value (w) of the second data type using a first transformation function (t);
the first calculation result (v') is transformed using the first transformation function (t), with the transformed first calculation result (w") representing the first operating result in the second data type;
the first operating result and the second operating result are compared by checking the transformed first calculation result (w") and the second calculation result (w') for equivalence; and
the apparatus has at least one sensor for monitoring a monitored zone, with data of the sensor being processed using the means in order to determine whether the monitored zone is infringed.

2. An apparatus in accordance with claim 1,
wherein the first calculation function (f) belongs to a first function library for operating the means, said first function library being associated with the first data type, and
wherein the second calculation function (g) belongs to a second function library for operating the means, said second function library being associated with said second data type.

3. An apparatus in accordance with one of the claims 1 to 2,
wherein the second calculation result (w') is transformed using a second transformation function (t⁻¹) which corresponds to an inverse of the first transformation function (t), with the transformed second calculation result (v") representing the second operating result in the first data type, and wherein the at least one test criterion comprises an equivalence of the first operating result and the second operating result in the first data type.

4. An apparatus in accordance with claim 3,
wherein, in order to determine an equivalence of the first operating result and the second operating result, the first operating result and the second operating result in the same data type are compared with one another using at least one predetermined threshold value, and wherein the equivalence of the first operating result and the second operating result is infringed when a predetermined relation between the first operating result and the second operating result exceeds the at least one predetermined threshold value.

5. An apparatus in accordance with any one of the preceding claims,
wherein the method is at least partly performed on a central server which is used to operate a sensor apparatus, with the server and/or the sensor apparatus having the at least one means.

6. An apparatus in accordance with any one of the preceding claims,
wherein the means comprises hardware, in particular an electronic arithmetic unit, preferably an arithmetic logic unit,
and/or
wherein the means comprises software, in particular wherein the software comprises a first function library for the first data type and a second function library for the second data type, with the first function library and the second function library each having at least one calculation function which are equivalent to one another.

7. An apparatus in accordance with any one of the preceding claims,
wherein the first data type and the second data type differ from one another in that the means is used on the operation using the first data type and the second data type with respect to different operating properties of the means.

8. An apparatus in accordance with any one of the preceding claims,
wherein the first data type is adapted to represent floating point numbers, and wherein the second data type is adapted to represent integers.

## Revendications

1. Dispositif comprenant un système de traitement électronique de données ayant au moins un moyen pour le traitement électronique de données, le dispositif étant réalisé pour mettre en oeuvre un procédé pour vérifier une exploitation dudit au moins un moyen, le procédé consistant à :
- exploiter le moyen en utilisant un premier type de données pour obtenir un premier résultat d'exploitation, l'exploitation du moyen en utilisant le premier type de données comprenant un traitement d'une première valeur (v) du premier type de données en utilisant une première fonction de calcul (t) pour obtenir un premier résultat de calcul (v') qui représente le premier résultat d'exploitation dans le premier type de données ;
- exploiter le moyen en utilisant un second type de données pour obtenir un second résultat d'exploitation, l'exploitation du moyen en utilisant le second type de données comprenant la génération d'une seconde valeur (w) et un traitement de la seconde valeur (w) du second type de données en utilisant une seconde fonction de calcul (g) équivalente à la première fonction de calcul (t) pour obtenir un second résultat de calcul (w') qui représente le second résultat d'exploitation dans le second type de données ;
- comparer le premier résultat d'exploitation et le second résultat d'exploitation en utilisant au moins un critère de vérification prédéfini ; et
- générer un signal (12) lorsque ledit au moins un critère de vérification prédéfini est violé,
**caractérisé en ce que**
la seconde valeur (w) du second type de données est générée en transformant la première valeur (v) du premier type de données en la seconde valeur (w) du second type de données en utilisant une première fonction de transformation (t) ;
le premier résultat de calcul (v') est transformé en utilisant la première fonction de transformation (t), le premier résultat de calcul transformé (w") représentant le premier résultat d'exploitation dans le second type de données ;
le premier résultat d'exploitation et le second résultat d'exploitation sont comparés en vérifiant l'équivalence du premier résultat de calcul transformé (w") et du second résultat de calcul (w') ; et
le dispositif comprend au moins un capteur pour surveiller une zone à surveiller, les données du capteur étant traitées en utilisant ledit moyen pour déterminer si la zone à surveiller est violée.

2. Dispositif selon la revendication 1,
dans lequel
la première fonction de calcul (f) appartient à une première bibliothèque de fonctions pour exploiter ledit moyen, qui est associée au premier type de données, et
la seconde fonction de calcul (g) appartient à une seconde bibliothèque de fonctions pour exploiter ledit moyen, qui est associée audit second type de données.

3. Dispositif selon l'une des revendications 1 à 2,
dans lequel
le second résultat de calcul (w') est transformé en utilisant une seconde fonction de transformation (t⁻¹) correspondant à un inverse de la première fonction de transformation (t), le second résultat de calcul transformé (v") représentant le second résultat d'exploitation dans le premier type de données, et
ledit au moins un critère de vérification inclut une équivalence du premier résultat d'exploitation et du second résultat d'exploitation dans le premier type de données.

4. Dispositif selon la revendication 3,
dans lequel
pour déterminer une équivalence du premier résultat d'exploitation et du second résultat d'exploitation, le premier résultat d'exploitation et le second résultat d'exploitation dans le même type de données sont comparés l'un à l'autre en utilisant au moins une valeur de seuil prédéterminée, et l'équivalence du premier résultat d'exploitation et du second résultat d'exploitation est violée lorsqu'une relation prédéterminée entre le premier résultat d'exploitation et le second résultat d'exploitation dépasse ladite au moins une valeur de seuil prédéterminée.

5. Dispositif selon l'une des revendications précédentes,
dans lequel
le procédé est au moins partiellement mis en oeuvre sur un serveur central utilisé pour exploiter un dispositif capteur, le serveur et/ou le dispositif capteur comprenant ledit au moins un moyen.

6. Dispositif selon l'une des revendications précédentes,
dans lequel
ledit moyen comprend du matériel, en particulier une unité arithmétique électronique, de préférence une unité arithmétique-logique, et/ou ledit moyen comprend un logiciel, en particulier le logiciel comprenant une première bibliothèque de fonctions pour le premier type de données et une seconde bibliothèque de fonctions pour le second type de données, la première bibliothèque de fonctions et la seconde bibliothèque de fonctions comprennent chacune au moins une fonction de calcul équivalente l'une à l'autre.

7. Dispositif selon l'une des revendications précédentes,
dans lequel
le premier type de données et le second type de données se distinguent l'un de l'autre par le fait que lors de l'exploitation en utilisant le premier type de données et le second type de données, le moyen est utilisé par rapport à différentes caractéristiques d'exploitation du moyen.

8. Dispositif selon l'une des revendications précédentes,
dans lequel
le premier type de données est réalisé pour représenter des nombres à virgule flottante, et le second type de données est réalisé pour représenter des nombres entiers.
